(19) Europäisches Patentamt / European Patent Office / Office européen des brevets

(11) **EP 4 447 573 A1**

(12) **EUROPEAN PATENT APPLICATION**
published in accordance with Art. 153(4) EPC

(43) Date of publication:
**16.10.2024 Bulletin 2024/42**

(21) Application number: **21967298.7**

(22) Date of filing: **10.12.2021**

(51) International Patent Classification (IPC):
**H04W 64/00** $^{(2009.01)}$  **H04W 84/06** $^{(2009.01)}$

(52) Cooperative Patent Classification (CPC):
**H04W 64/00; H04W 84/06**

(86) International application number:
**PCT/JP2021/045715**

(87) International publication number:
**WO 2023/105807 (15.06.2023 Gazette 2023/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **YOSHIOKA, Shohei**
**Tokyo 100-6150 (JP)**
• **KURITA, Daisuke**
**Tokyo 100-6150 (JP)**

• **NAGATA, Satoshi**
**Tokyo 100-6150 (JP)**
• **YOU, Luhua**
**Beijing 100190 (CN)**
• **SUN, Weiqi**
**Beijing 100190 (CN)**
• **WANG, Jing**
**Beijing 100190 (CN)**
• **CHEN, Lan**
**Beijing 100190 (CN)**
• **ZHAO, Jinming**
**Beijing 100876 (CN)**
• **LI, Yong**
**Beijing 100876 (CN)**

(74) Representative: **Hoffmann Eitle**
**Patent- und Rechtsanwälte PartmbB**
**Arabellastraße 30**
**81925 München (DE)**

(54) **TERMINAL AND REPORTING METHOD**

(57) A terminal includes: a control unit configured to obtain a plurality of pieces of terminal position-related information using a plurality of reference points that are related to a non-terrestrial network; and a transmission unit configured to report the plurality of pieces of terminal position-related information to a base station.

FIG.11

**Description**

Technical Field

The present invention relates to a terminal and a reporting method in a radio communication system.

Background Art

In 3GPP (3rd Generation Partnership Project), in order to realize further increase in system capacities, further increase in data transmission rates, further reduction in delays in radio sections, and the like, a radio communication scheme called 5G or NR (New Radio) (hereinafter, the wireless communication scheme is referred to as "NR") has been developed. In 5G, various radio technologies and network architectures have been studied in order to satisfy the requirement that the delay in a radio section be less than or equal to 10 Gbps while achieving a throughput greater than or equal to 1 ms (for example, Non-Patent Document 1).

Further, currently, NTN (Non-Terrestrial Network) is being studied. The NTN provides services to an area which cannot be covered by a terrestrial network mainly in terms of costs, by using a non-terrestrial network such as an artificial satellite (hereinafter, referred to as a satellite).

Related Art Document

Non-Patent Documents

Non-Patent Document 1: 3GPP TS 38.300 V16.6.0 (2021-06)

SUMMARY OF THE INVENTION

Problems to be Solved by the Invention

It is important to grasp a position of a terminal by a NW side (network side) of NTN. However, when position information obtained from the terminal is used in the NW, the reliability of the position information may not be high. Therefore, for example, in the NW, it is desirable to be able to verify whether or not the position information obtained from the terminal is reliable based on some information related to the position of the terminal.

However, in the related art, in order to grasp the position of the terminal by the NW side, it is not clear what information the terminal reports to the NW.

The present invention has been made in view of the above, and an object of the present invention is to provide a technique for a terminal to report appropriate terminal position-related information to a network. Means for Solving the Problems

According to the disclosed technique, there is provided a terminal including:

a control unit configured to obtain a plurality of pieces of terminal position-related information using a plurality of reference points that are related to a non-terrestrial network; and
a transmission unit configured to report the plurality of pieces of terminal position-related information to a base station.

Effects of the Invention

According to the disclosed technique, a technique for a terminal to report appropriate terminal position-related information to a network is provided.

Brief Description of the Drawings

[Fig. 1] FIG. 1 is a first diagram for explaining a non-terrestrial network;
[Fig. 2] FIG. 2 is a second diagram for explaining a non-terrestrial network;
[Fig. 3] FIG. 3 is a third diagram for explaining a non-terrestrial network;
[Fig. 4] FIG. 4 is a fourth diagram for explaining a non-terrestrial network;
[Fig. 5] FIG. 5 is a diagram for explaining a timing advance;
[Fig. 6] FIG. 6 is a diagram for explaining an example of calculation of a timing advance;

[Fig. 7] FIG. 7 is a diagram for explaining a flow of basic processing in an embodiment of the present invention;

[Fig. 8] FIG. 8 is a diagram showing an example of a reference point (RP);

[Fig. 9] FIG. 9 is a diagram showing an example of a reference point (RP);

[Fig. 10] FIG. 10 is a diagram showing an example of a case where a plurality of values are calculated using a plurality of reference points (RP);

[Fig. 11] FIG. 11 is a diagram for explaining Example 3;

[Fig. 12] FIG. 12 is a diagram showing an example of a functional configuration of a base station according to an embodiment of the present invention;

[Fig. 13] FIG. 13 is a diagram showing an example of a functional configuration of a terminal in an embodiment of the present invention;

[Fig. 14] FIG. 14 is a diagram showing an example of a hardware configuration of a base station or a terminal according to an embodiment of the present invention; and

[Fig. 15] FIG. 15 is a diagram showing an example of a configuration of a vehicle in an embodiment of the present invention.

Detailed Description of the Invention

Hereinafter, an embodiment of the present invention will be described with reference to the figures. The embodiment described below is an example, and the embodiment to which the present invention is applied is not limited to the following embodiment.

In the operation of the radio communication system according to the embodiment of the present invention, an existing technique may be used as appropriate. The existing technique is, for example, existing NR or LTE, but is not limited to existing NR or LTE.

In addition, in the embodiment of the present invention described below, terms such as SS (Synchronization signal), PSS (Primary SS), SSS (Secondary SS), PBCH (Physical Broadcast Channel), PRACH (Physical Random Access Channel), PDCCH (Physical Downlink Control Channel), PDSCH (Physical Downlink Shared Channel), PUCCH (Physical Uplink Control Channel), and PUSCH (Physical Uplink Shared Channel) used in the existing LTE may be used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR-".

In the embodiment of the present invention, the duplex scheme may be a time division duplex (TDD) scheme, a frequency division duplex (FDD) scheme, or another scheme (for example, flexible duplex).

In the embodiment of the present invention, a radio parameter or the like being "configured" may mean that a predetermined value is pre-configured or that a radio parameter notified from a base station or a terminal is configured.

(On Non-Terrestrial Network)

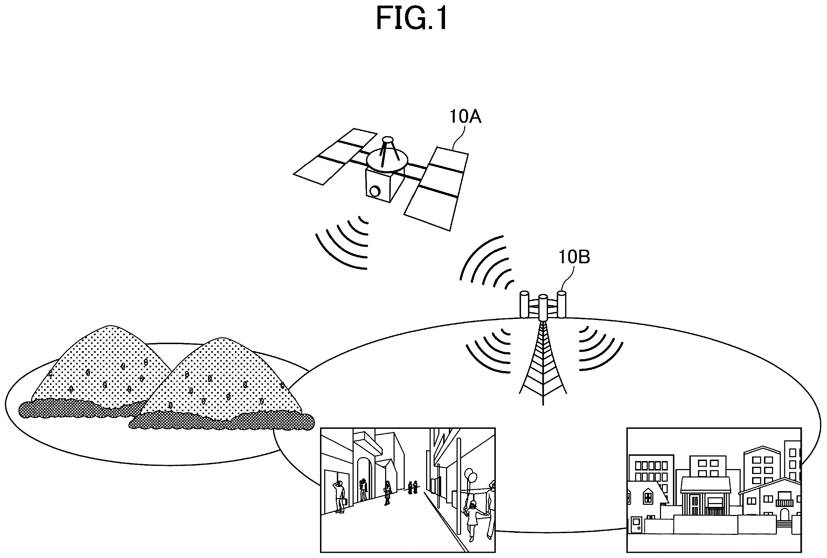

FIG. 1 is a first diagram for explaining a non-terrestrial network. The non-terrestrial network (NTN) provides services to an area that cannot be covered by a terrestrial network mainly in terms of costs, using a non-terrestrial device such as a satellite. Further, NTN can provide a more reliable service. For example, NTN is assumed to be applied to IoT (Inter of Things), ships, buses, trains, and critical communications. Also, NTN has scalability by efficient multicast or broadcast.

As an example of NTN, as shown in FIG. 1, a satellite 10A retransmits signals transmitted from a terrestrial base station 10B to be able to provide services in an area where no terrestrial base stations is placed, such as in mountainous regions.

The terrestrial network (for example, a terrestrial 5G network) may have a configuration as described below. The terrestrial network includes one or more base stations 10 and terminals 20. The base station 10 is a communication apparatus that provides one or more cells and performs radio communication with the terminal 20. The physical resource of the radio signal is defined in a time domain and a frequency domain, and the time domain may be defined by the number of OFDM symbols, and the frequency domain may be defined by the number of subcarriers or the number of resource blocks. The base station 10 transmits a synchronization signal and system information to the terminal 20. The synchronization signal is, for example, NR-PSS and NR-SSS. The system information is transmitted by, for example, NR-PBCH and is also referred to as broadcast information.

The base station 10 transmits a control signal or data to the terminal 20 in downlink (DL), and receives a control signal or data from the terminal 20 in uplink (UL). Both the base station 10 and the terminal 20 can transmit and receive signals by performing beamforming. In addition, both the base station 10 and the terminal 20 can apply communication by MIMO (Multiple Input Multiple Output) to DL or UL. In addition, both the base station 10 and the terminal 20 may perform communication via a secondary cell (SCell) and a primary cell (PCell) by carrier aggregation (CA).

The terminal 20 is a communication apparatus having a radio communication function, such as a smartphone, a mobile phone, a tablet, a wearable terminal, and a machine-to-machine (M2M) communication module. The terminal 20 receives a control signal or data from the base station 10 in DL and transmits a control signal or data to the base station 10 in UL, thereby using various communication services provided by the radio communication system.

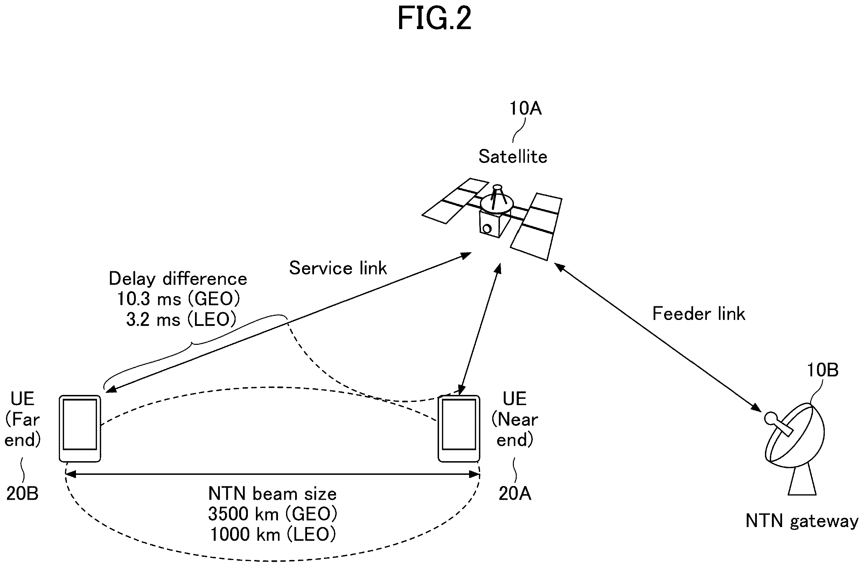

FIG. 2 is a second diagram for explaining a non-terrestrial network. An area per cell or beam in NTN is very large compared with a terrestrial network (TN). FIG. 2 shows an example of an NTN constructed by satellite retransmission. The connection between the satellite 10A and the NTN gateway 10B is called a feeder link, and the connection between the satellite 10A and the UE 20 is called a service link.

As shown in FIG. 2, the difference in delay between the near side UE20A and the far side UE20B is, for example, 10.3ms for GEO (Geosynchronous Orbit) and 3.2ms for LEO (Low Earth Orbit). The beam size in NTN is, for example, 3500km in the case of GEO, and 1000km in the case of LEO. An area formed on the ground by a beam of a satellites or a flying object in the NTN may be referred to as a "service area", a "beam area", or a "cell".

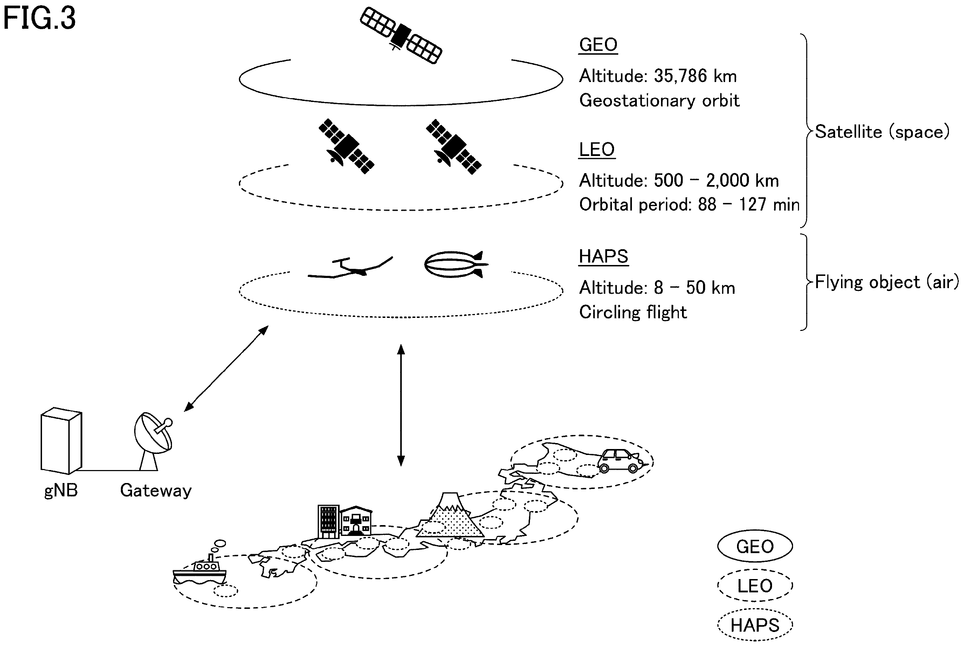

FIG. 3 is a third diagram for explaining a non-terrestrial network. As shown in FIG. 3, the NTN is realized by a satellite in space or a flying object in the air. For example, a GEO-satellite may be a satellite located at 35,786 km and having a geostationary orbit. For example, an LEO satellite may be a satellite located at an elevation of 500 to 2000 km and orbiting at a cycle of 88 to 127 minutes. For example, a HAPS (High Altitude Platform Station) may be a flying object that is located at an altitude of 8 to 50 km and performs a circling flight, or may be a flying object that performs another flight.

As shown in FIG. 3, the GEO satellite, the LEO satellite, and the HAPS fliying object may be connected to a terrestrial station gNB via a gateway. The service area may increase in the order of HAPS, LEO, and GEO.

For example, NTN allows the coverage of 5G networks to be extended for non-served or served areas. Also, for example, NTN can improve service continuity, availability, and reliability in ships, buses, trains, or other important communications. That a network is the NTN may be notified by transmitting a dedicated parameter to the terminal 20, and the dedicated parameter may be a parameter related to determination of TA (Timing Advance) based on information related to a satellite or a flying object, for example.

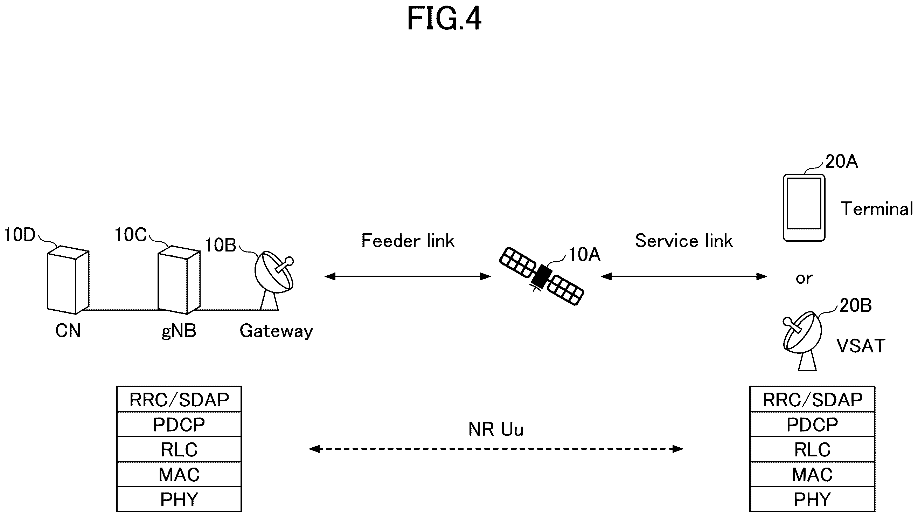

FIG. 4 is a fourth diagram for explaining a non-terrestrial network. FIG. 4 shows an example of a network architecture of NTN assumed in the case of a transparent payload. As shown in FIG. 4, a CN (Core Network) 10D, a gNB 10C, and a gateway 10B are connected. The gNB is an example of a base station. The gateway 10B is connected to the satellite 10A via a feeder link. The satellite 10A is connected to a mobile station 20A or a VSAT (Very Small Aperture Terminal) 20B via a service link. NR Uu is established between the gNB 10C and the terminal 20A or the VSAT 20B.

Further, as an assumption of the network architecture of NTN, FDD may be adopted, or TDD may be possible. Cells on the ground may be fixed or may be movable. The terminal 20 may have a capability of GNSS (Global Navigation Satellite System). In the present embodiment, the terminal 20 has a GNSS capability. Further, as the terminal 20, for example, a handheld device of power class 3 in FR1 may be assumed. Also, at least in FR2, a VSAT device may be envisioned.

Also, as the network architecture of NTN, a regenerative payload may be assumed. For example, a gNB (base station) function may be mounted in a satellite or a flying object. Alternatively, a gNB-DU may be mounted on a satellite or a flying object, and a gNB-CU may be arranged as a terrestrial station.

In the following description, an object (relay apparatus) existing in the air is assumed to be a satellite 10A. However, this is merely an example, and as described above, the object existing in the air may be a flying object other than the satellite 10A.

In the following, the terrestrial base station 10C and the gateway 10B are also collectively referred to as a base station 10. When the terminal 20A and the VSAT 20B are not distinguished from each other, they are also collectively referred to as a terminal 20. Also, the terrestrial base station 10C or a base station mounted on a satellite may be referred to as a base station 10. In the following description, it is assumed that, NW used in sentences such as "receiving from a network (NW)" and "reporting to a NW" is the base station 10. That is, the NW in the following description may be replaced with the base station 10. However, the NW is not limited to the base station 10.

(On TA control)

As will be described later, in the present embodiment, there is an option to report a TA value from the terminal 20 to the NW, and thus the TA will be described here.

TA (Timing Advance) control is a control for uplink (UL) transmission of the terminal 20, and is a control for shifting an UL frame by a certain time ($T_{TA}$) with respect to a downlink (DL) frame.

More specifically, due to the difference in propagation delay between the base station 10 and a plurality of terminals 20, if TA control is not performed, timings of UL signals received from the plurality of terminals 20 are not aligned in the base station 10. Therefore, TA control is performed so that the reception timings at the base station 10 are aligned for transmission of each terminal 20.

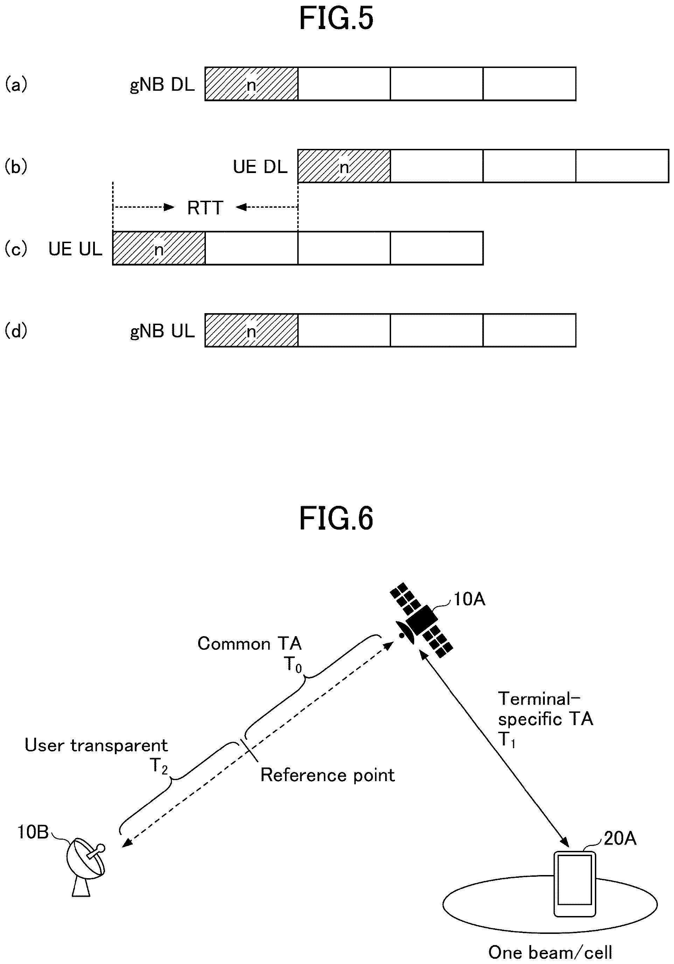

A specific example will be described with reference to FIG. 5. In FIG. 5, for convenience of explanation, one square is one slot, and a slot n is shown by hatching. For convenience of description, it is assumed that an RTT (Round Trip Time) between the base station 10 and the terminal 20 is two slots. (a) and (b) illustrate that a signal of DL transmission of the base station 10 in the slot n arrives at the terminal 20 with a delay of one slot. As illustrated in (c) and (d), the terminal 20 performs UL transmission at a timing advanced by the RTT with respect to the timing of DL reception, and thus the base station 10 receives UL transmission from the terminal 20 at the timing of its own slot n. Each terminal 20 performs such control, and thus the base station 10 can receive UL signals from a plurality of terminals 20 at the same timing.

(TA in NTN)

In TA control in NTN, the terminal 20 transmits an uplink frame i corresponding to a downlink frame i $T_{TA}$ before the start timing of the downlink frame i. Note that in this embodiment, $T_{TA}$ is referred to as "TA" in some cases. The TA may be referred to as a timing adjustment value. Further, each of $N_{TA}$, $N_{TA,UE-common}$, $N_{TA,common}$, and the like may be referred to as TA or a timing adjustment value. The terminal 20 performs signal transmission at a timing based on the reception timing of the signal and the timing adjustment value.

In NTN according to the present embodiment, TA (Full TA) is as follows.

$$\texttt{Full TA = TA on feeder link + TA on service link}$$

TA on the feeder link is a value corresponding to a round trip delay (RTT) on the feeder link, and is $2(T_0+T_2)$ as shown in FIG. 6.

As shown in FIG. 6, $T_2$ is a value transparent to the UE and compensated by the network. To simplify gNB implementation, $T_2$ may be a constant. $T_0$ is a value common to all UEs, and may be a value that can be broadcast to terminals 20 by a SIB, for example. Note that a reference point (which may be referred to as an RP, or the like) may be in a service link, and in that case, To has a negative value.

TA on the service link is a value corresponding to a round trip delay (RTT) on the service link, and is $2T_1$. $T_1$ is a value specific to the UE (User-specific) and varies depending on the location of the UE.

Basically, the terminal 20 can calculate its own $T_{TA}$ from the common TA (2To) and the UE-specific TA ($2T_1$) estimated (calculated) by the terminal 20 itself, for example, by the following equation. The following equation is a calculation equation of $T_{TA}$ assumed in NTN of Rel-17.

$$\texttt{T}_{TA}=(\texttt{N}_{TA}+\texttt{N}_{TA,UE-specific}+\texttt{N}_{TA,common}+\texttt{N}_{TA,offset}) \times \texttt{T}_c$$

The above-mentioned Tc is a predetermined time length. Regarding $N_{TA}$ in the above equation, it is 0 at the time of PRACH transmission, and is updated with a TA command of a RAR, and then updated with a TA command MAC CE. In the first UL transmission after the RAR, $N_{TA}=T_A \times 16 \times 64/2^{\mu}$, and $T_A$ (=0,1,2,...,3846) is a value notified by a 12-bit TAC field in the RAR. In other transmissions, $N_{TA\_new}=N_{TA,old}+(T_A-31) \times 16 \times 64/2^{\mu}$, and $T_A$(= 0,1,2,...,63) is notified by a 6-bit TAC field in the TA command MAC CE.

$N_{TA,UE-specific}$ is a TA estimated by the UE itself to compensate for a service link delay. $N_{TA,common}$ is a common TA controlled by the network, including a timing offset required for the network. Note that the value of $N_{TA,common}$ may be assumed to be 0 (that is, it may be assumed that an UL frame and a DL frame are aligned in the satellite 10A). $N_{TA,offset}$ is a fixed offset value used to calculate TA.

Note that $N_{TA,common}$ is an example of a common timing adjustment value based on a delay that occurs between the satellite 10A and the base station 10 in the non-terrestrial network.

(Problem, proposal overview)

In NTN, on the NW side (the base station 10 or the like), it is important to know the position of the terminal 20. For example, the base station 10 can estimate a propagation delay to the terminal 20 and the like based on the position of the terminal 20, and can perform appropriate transmission and reception control.

However, when using a position information acquired from the terminal 20 in the NW, the position information may not be highly reliable. Therefore, for example, it is desirable that the base station 10 can estimate the position of the terminal 20 based on some information related to the position of the terminal 20 and verify whether the terminal position information acquired from the terminal 20 is reliable. In addition, it is desirable that the terminal position information itself transmitted from the terminal 20 is confidential (is not easily falsified).

However, in the related art, in order to grasp the position of the terminal 20 on the NW side, it is not clear what information the terminal 20 connected to NTN reports to the NW. Specifically, for example, the following points are not clear.

- What information the terminal 20 reports to the network as information related to the position of the terminal 20.

- What signaling to use when the terminal 20 reports information to the network.

- What is the trigger for the terminal 20 to report information to the network.

In the present embodiment, it is assumed that information (referred to as position-related information or terminal position-related information) reported to the network by the terminal 20 is information based on position information acquired by the terminal 20 using a GNSS function (GPS or the like) included in the terminal 20. For example, the position-related information may be a UE-specific TA ($N_{TA,UE\text{-}specific}$) calculated based on a position acquired by a GNSS in Rel-17 NTN. However, the present embodiment is not limited to information based on position information acquired by the GNSS function of the terminal 20, and may be applied to a case where position information is acquired by another method.

(Basic operation example)

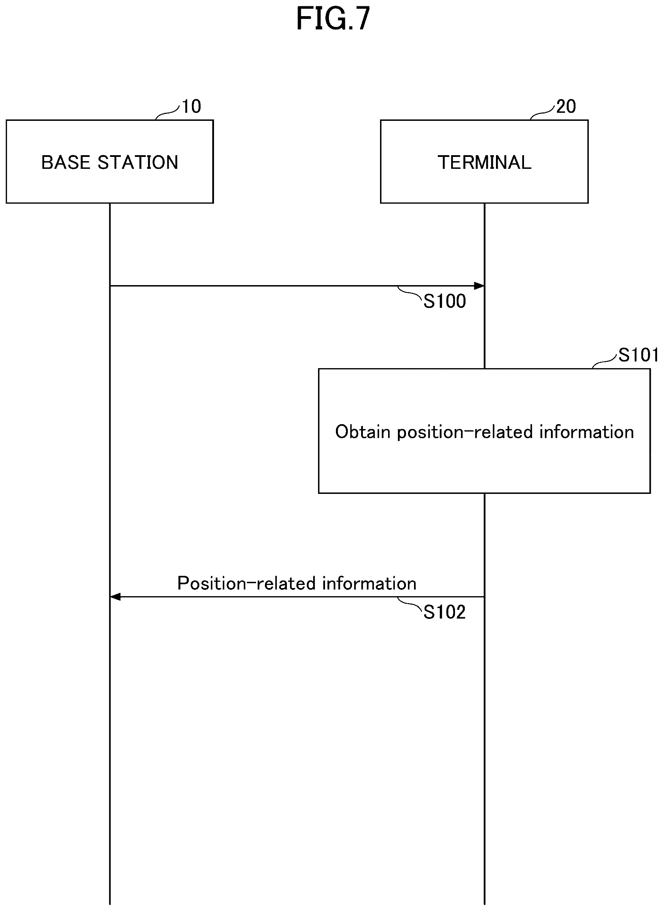

A basic operation example in the present embodiment will be described with reference to FIG. 7. In S100, the base station 10 transmits configuration information or a report instruction to the terminal 20. This configuration information is, for example, configuration information for designating what kind of position-related information the terminal 20 should report. The report instruction may be a trigger for the terminal 20 to acquire and report the position-related information.

In S101, the terminal 20 obtains the position-related information. In S102, the terminal 20 reports the position-related information to the base station 10. Details of the contents of the position-related information, the reporting method, and the like will be described in Examples described later.

(Outline of embodiment)

In the present embodiment, Example 0 to Example 3 will be described as examples of the position-related information reported to the base station 10 by the terminal 20. Further, Example 4 will be described as an example applicable to Examples 0 to 3. The outline of Examples 0 to 3 is as follows. In the following description, "A/B" means A or B, or A and B.

Example 0: The terminal 20 reports one TA value to the NW.

Example 1: The terminal 20 reports a plurality of (N) values of TA/RTT/one-way propagation delay/distance, between the terminal 20 and the reference point to the NW.

Example 2: The terminal 20 directly reports a position information of the terminal 20 to the NW.

Example 3: The terminal 20 reports a plurality of (N) values of a difference of "TA/RTT/one-way propagation delay/distance" between the position of the terminal 20 obtained by GNSS and two reference points to the NW. Each example will be described below. Any one of the following Examples 0 to 4 may be used.

(Example 0)

First, Example 0 will be described. In Example 0, the terminal 20 reports, for example, one TA value to the NW as the position-related information. As the TA value, for example, a value of UE-specific TA in Rel-17 may be used. The base station 10 can grasp a distance between the base station 10 and the terminal 20 or a distance between the satellite 10A and the terminal 20 from the TA value received from the terminal 20, and thus can estimate an approximate position of the terminal 20.

The value reported by the terminal 20 may be for example a full TA that is "$T_{TA}=(N_{TA}+N_{TA,UE\text{-}specific}+N_{TA,common}+N_{TA,offset})\times T_c$" or may be the UE-specific TA. The UE-specific TA may be $N_{TA,UE\text{-}specific}$, or may be $N_{TA,UE\text{-}}specific\times T_c$.

The granularity of the value reported by the terminal 20 may be a slot, a symbol, or a plurality of slots/a plurality of symbols/Tc/a plurality of Tc/a subframe/a plurality of subframes /ms/ a plurality of ms. Note that ms is millisecond. In the present specification, the term "granularity" may be replaced with "unit".

The terminal 20 may transmit one TA value to the NW by MAC CE, RRC, or PHY (as UCI) .

As a trigger for the terminal 20 to report a TA value, for example, the following Alt (Alternative) 1 to Alt (Alternative) 5 are available. That is, if the terminal 20 determines that at least one of the five conditions is satisfied, the terminal 20 reports the TA value to the base station 10 with the determination as a trigger. Note that any two or more of Alt1 to 5 may be combined.

Al t1:

The TA value is reported in a RACH procedure (random access procedure). The terminal 20 obtains a TA value and reports the TA value, with the start of the RACH procedure as a trigger. The terminal 20 reports the TA value by including the TA value in the MSG3 or the MSGA (that is, the PUSCH transmission in the RACH procedure).

Alt2 :

A timer (periodic timer) is configured in the terminal 20 from the NW. For example, the timer is returned to the initial value and started at the time when the terminal 20 reports the TA value. When the timer expires, the terminal 20 reports the TA value with the expiration as a trigger. In the present specification, the "configuration" may be one configured in the terminal 20 from the NW as described above, or may be one configured in the terminal 20 in advance.

Alt3:

A threshold is configured in the terminal 20 from the NW. When the terminal 20 detects that a current TA/UE-specific TA value has changed by a value larger than a threshold value from the value (TA/UE-specific TA value) of the report that has succeeded in the last (most recent) report, the terminal 20 reports the TA value using the detection as a trigger.

Alt4:

The terminal 20 performs reporting using signaling of a configuration/instruction received from the NW as a trigger.

Alt5:

When uplink data transmission is performed, if there is a free PUSCH resource for data transmission, the terminal 20 may report a TA value using the free resource.

Note that Example 0 may be executed when an RRC parameter of Rel-18 (example: parameter for NW-verified UE location) is provided. If the parameter is not provided, an NTN mechanism of Rel-17 may be applied. Reporting details of one TA value for Rel-18 NW-verified UE location may be different from reporting details in Rel - 17NTN.

In addition, in Example 0, the value to be reported is one TA value, but this is an example. In Example 0, the terminal 20 may report one "RTT between the terminal 20 and the reference point", one "one-way propagation delay between the terminal 20 and the reference point", or one "distance between the terminal 20 and the reference point" to the NW. As the reference point, a reference point described in Example 1 or the like to be described later may be used.

According to Example 0, the terminal 20 reports the position-related information such as the TA value to the NW, and thus the range of the position of the terminal 20 can be estimated in the NW.

(Analysis for Example 0)

When the NW (the base station 10 or the like) aims to verify the position of the terminal 20, the base station 10 can know only a rough range of the terminal 20 by a report of only a single TA value as in the case of Example 0, and therefore, the report may be insufficient for verifying the position of the terminal 20.

In order to calculate a more specific position (more accurate position) of the terminal 20, a further parameter is required in addition to the TA value.

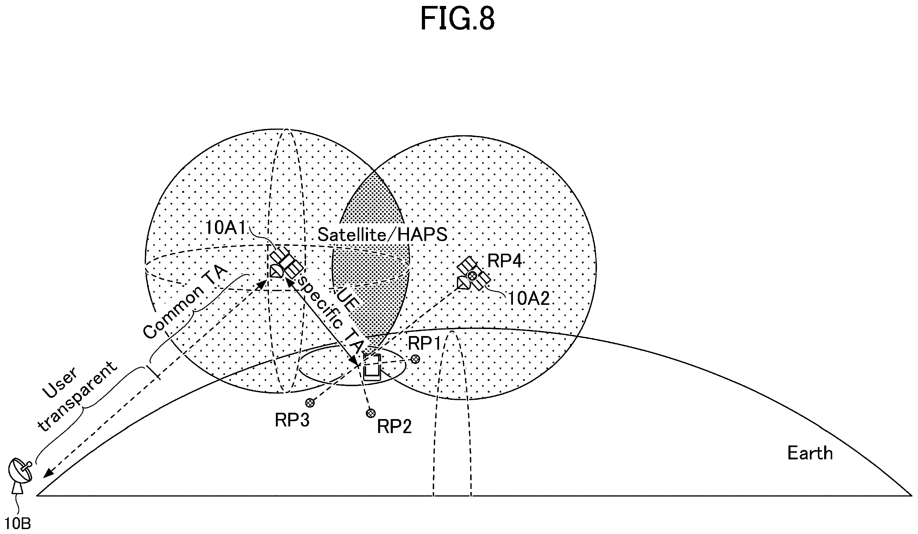

For example, as shown in FIG. 8, it can be considered to report a plurality of TAs using a plurality of reference points. For example, in the example of FIG. 8, when the positions of RP1 to RP4 are known in the NW, the terminal 20 reports, for example, a distance between the terminal 20 and RP1, a distance between the terminal 20 and RP2, a distance between the terminal 20 and RP3, and a distance between the terminal 20 and RP4 to the NW so that the NW can accurately estimate the position of the terminal 20. Example 1 from such a viewpoint will be described below.

(Example 1)

In Example 1, the terminal 20 reports a plurality of (N) values of "TA/RTT/one-way propagation delay/distance"

between the terminal 20 and the reference point to the NW as position-related information. The number N of values will be described in Example 1-1 described later. In addition, the reference point will be described in Example 1-2 to be described later.

Each report value may be, for example, any of the following Alt1 to Alt4.

Al t1:

TA between a position of the terminal 20 and a reference point. In this case, a Rel-17 UE specific TA with the satellite 10 as the reference point can be used as one of the values. For example, the terminal 20 can obtain the distance from the position of the terminal 20 obtained by GNSS and the position of the reference point, and calculate the TA from the distance.

Alt2 :

RTT between the position of the terminal 20 and the reference point. For example, the terminal 20 can calculate the RTT from the position of the terminal 20 itself obtained by GNSS and the position of the reference point.

Alt3:

One way propagation delay between the position of the terminal 20 and the reference point. For example, the terminal 20 can calculate the one way propagation delay from the position of the terminal 20 obtained by GNSS and the position of the reference point.

Alt4:

A distance between the position of the terminal 20 and the reference point. For example, the terminal 20 can calculate the distance from the position of the terminal 20 obtained by GNSS and the position of the reference point.

N values that are the number of values to be reported may be values in the same Alt or may be a plurality of different Alt values. For example, in a case where three values are reported, the terminal 20 may report three TAs calculated using three reference points, or may report a TA, an RTT, and a distance for the same reference point or a plurality of different reference points.

The terminal 20 may calculate/determine each of the N values based on a relationship with different satellites. For example, the terminal 20 calculates a value #0 using a satellite #0 and calculates a value #1 using a satellite #1. The same applies to a value #3 and subsequent values. The "satellite" may be replaced with a "reference point".

For TA/RTT/delay, granularity of the report value may be any of slot/symbol/a plurality of slots/ a plurality of symbols/Tc/ a plurality of Tc/subframe/ a plurality of subframes/ms/ a plurality of ms. With respect to distance, the granularity may be any of m/cm/a plurality of m/a plurality of cm/ and the like.

(Example 1: Reporting Method)

The terminal 20 may transmit a report value by any of MAC CE, RRC, and PHY (as UCI). More particularly, there are the following Alt1 and Alt2.

Al t1:

The terminal 20 includes all of the plurality of values in the same MAC CE/RRC signaling/PHY signaling. For example, when three values are reported, assuming that MAC CE is used, the terminal 20 reports the three values by including the three values in the MAC CE.

Alt2 :

The terminal 20 may divide the plurality of values into any of MAC CE/RRC signaling/PHY signaling. For example, when three values are reported, the terminal 20 may report a value 1 by the MAC CE, report a value 2 by the RRC, and report a value 3 by the UCI.

(Example 1: Reporting trigger)

As a trigger for the terminal 20 to report a value, for example, the following Alt1 to 5 are available. That is, when the terminal 20 determine that at least one of the following five conditions Alt1 to 5 is satisfied, the terminal 20 reports a value to the base station 10 with the determination as a trigger. Note that any two or more of Alt1 to 5 may be combined.

Al t1:

Reporting of a value is performed in a RACH procedure (random access procedure). The terminal 20 obtains a value to be reported and reports the value, with the start of the RACH procedure as a trigger. The terminal 20 may report the value by including the value in a MSG3 or a MSGA.

Alt2 :

A timer (periodic timer) is configured in the terminal 20 from the NW. For example, the timer is returned to the initial value and started at the time when the terminal 20 reports the value. When the timer expires, the terminal 20 reports the value with the expiration as a trigger.

Alt3:

A threshold is configured in the terminal 20 from the NW. When detecting that the current value has changed by a value larger than a threshold value from the value of the last (most recent) report that has succeeded, the terminal 20 reports the value using the detection as a trigger. If all values are included in the same MAC CE/RRC/PHY, the following may apply.

Alt3-1:

The terminal 20 triggers reporting when any one of a plurality of values changes by a value larger than a threshold value.

Alt3-2:

The terminal 20 triggers reporting when all of the plurality of values (each of the plurality of values) change by a value larger than a threshold value.

Alt3-3:

The terminal 20 triggers reporting when not all of but multiple values of the plurality of values change by a value larger than a threshold.

Alt4:

The terminal 20 performs reporting using signaling of a configuration/instruction received from the NW as a trigger.

Alt5:

When uplink data transmission is performed, if there is a free PUSCH resource for data transmission, the terminal 20 may report a value using the free resource.

(Example 1-1)

In Example 1-1, an example of a method of determining N will be described.
According to the principle of satellite positioning, at least three reference points are required to determine one specific position. Here, a case where a clock offset (clock error) of a receiver is considered will be described.
The clock offset is a signal propagation time measurement error caused by an unstable clock of the receiver. The clock offset may directly affect accuracy of positioning. For example, if the time offset between a satellite clock and a receiver clock is $1\mu s$, range observation error may be 300m.
To eliminate the effect of the clock offset, at least four reference points are required, as shown in the following equations.

$$[(x_1-x)^2+(y_1-y)^2+(z_1-z)^2]^{1/2}+c(V_{t1}-V_{t0})=d_1$$

$$[(x_2-x)^2+(y_2-y)^2+(z_2-z)^2]^{1/2}+c(V_{t2}-V_{t0})=d_2$$

$$[(x_3-x)^2+(y_3-y)^2+(z_3-z)^2]^{1/2}+c(V_{t3}-V_{t0})=d_3$$

$$[(x_4-x)^2+(y_4-y)^2+(z_4-z)^2]^{1/2}+c(V_{t4}-V_{t0})=d_4$$

In the above equations, x, y, z are the coordinates of the terminal 20, and $V_{t0}$ is a clock offset of the terminal 20, which are unknown parameters. $d_i$ is a distance between the terminal 20 and the reference point, and $x_i$, $y_i$, $z_i$ are known space rectangular coordinates of the reference point. $V_{ti}$ is a clock offset of the satellite clock and is transmitted by satellite ephemeris.

The number N of report values is N=3 (a value in an ideal case without a clock offset) or N=4 (a value in consideration of a clock offset). Note that N=3 or 4 is an example, and a value other than N=3 or 4 may be used. For example, N may be 2, 5, or a value of 6 or more.

The number N of report values may be predefined/fixed by a technical specification, may be configured/indicated to the terminal 20 from the NW, may be reported from the terminal 20 to the NW as UE capability, or may be determined based on a given condition (e.g., how many satellites the terminal 20 is tracking).

(Example 1-2)

The terminal 20 determines one different reference point for each report value in Example 1. Note that one reference point may be used for a plurality of report values. The reference point is a point (for example, a satellite) associated with NTN, but the reference point is not limited to a point associated with NTN. As methods for the terminal 20 to determine the reference point, there are the following Alt1 to 6. Note that a "satellite" may be replaced with a "flying object".

Al t1:

The terminal 20 determines a satellite as a reference point. The position of the satellite can be obtained from information (e.g., satellite ephemeris) broadcast from the NW.

Alt2 :

The terminal 20 determines a subsatellite point as a reference point. The position of the subsatellite point can be calculated from information (e.g., satellite ephemeris) broadcast from the NW.

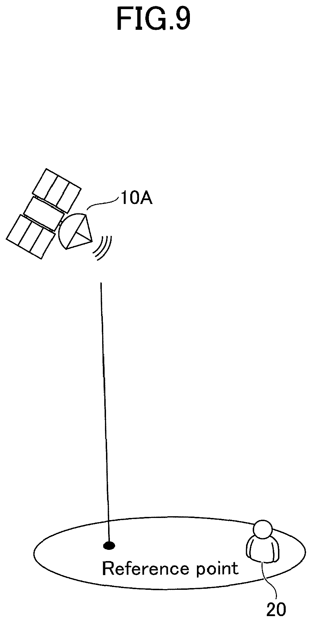

The subsatellite point is a point where a line connecting the center of the earth and the satellite intersects with the ground surface. This point is a ground point directly below the satellite and can be represented by latitude and longitude or ECEF coordinates. FIG. 9 shows an example of the case where the subsatellite point is set as a reference point.

Alt3:

The terminal 20 determines a center of a beam/cell of a serving cell/neighbor cell as a reference point. The "cell" here may be a cell of a terrestrial network or a cell (service area) of NTN. The "beam" here may be a service area of NTN (e.g., formed by a beam of satellite).

The position of the cell center of the serving cell/neighbor cell is broadcast from the NW (base station 10) to the terminal 20, for example. Alt3 includes the following Alt3-1 and Atl3-2.

Alt3-1:

Which cell (serving cell/neighbor cell) center is used as a reference point may be configured by the NW to the terminal 20, for example, using a PCI or using an index mapped to the cell.

Atl3:

The terminal 20 may select a cell (serving cell/neighbor cell) to be used as a reference point. The terminal 20 may report the selection result to the NW, for example, using a PCI or using an index mapped to the cell.

Alt4:

The reference point may be a fixed point configured in the terminal 20 by the NW. In this case, the reference point may be configured in the terminal 20 from the NW using a position of ECEF, or may be implicitly configured in the terminal 20 from the NW using a common TA parameter.

Alt5:

The reference point may be a fixed point selected by the terminal 20, and it may be reported to the NW. For example, the terminal 20 may report a position of the reference point selected by the terminal 20 itself as coordinates of ECEF.

Alt6:

The terminal 20 may select a base station or a GW as the reference point.
The granularity of the position of the reference point may be any of m/cm/a plurality of m/ a plurality of cm/ and the like.
The terminal 20 may use different Alts in Alt1 to 6 described above for N values, or may use different Alts in Alt1 to 6 for a plurality of satellites. For example, in a case where three values are reported, Alt1 may be applied to two values, and Alt2 may be applied to one value.

(Reporting Method in Example 1-2)

The terminal 20 may report the reference point (e.g., a corresponding index) together with each of N report values or all of N report values. Alternatively, the reference point may not be reported.
For example, when reporting three report values 1, 2, and 3 obtained using reference points 1, 2, and 3, the terminal 20 may report the three report values 1, 2, and 3 in the form of "{report value 1, reference point 1}, {report value 2, reference point 2}, {report value 3, reference point 3}", or "{report value 1, report value 2, report value 3}, {reference point 1, reference point 2, reference point 3}.
The reference point to be reported is any one or more of a satellite, a subsatellite point, a center of a beam/cell of a serving cell/neighbor cell, a point configured from the NW, a point selected by the terminal 20, and a gNB/GW.

<Explicit notification of reference point>

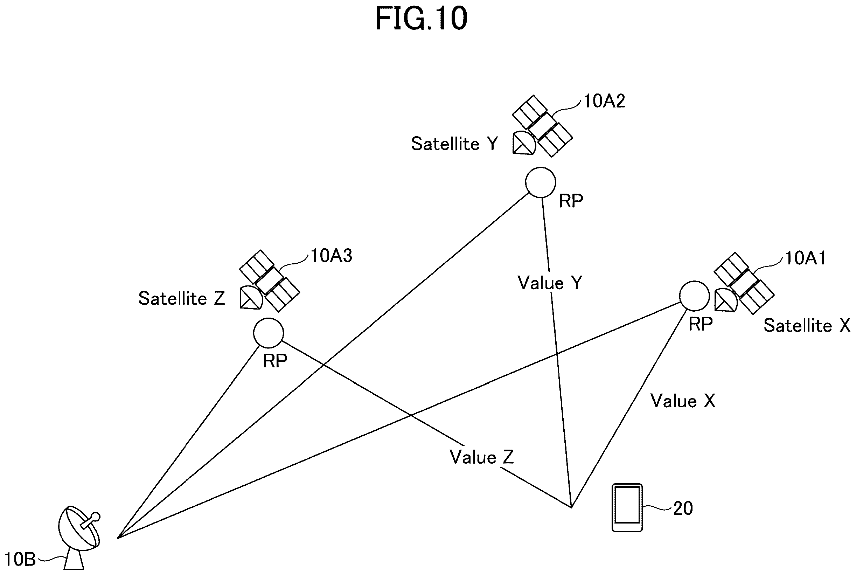

When the terminal 20 reports N values, the terminal 20 may include, in the report, information indicating which link the report value is associated with, together with each report value.
For example, as illustrated in FIG. 10, it is assumed that the terminal 20 obtains a report value by using each of satellites X, Y, and Z as a reference point and performs reporting. In this case, the terminal 20 reports information indicating which satellite each report value is associated with, together with the report value. For example, information of {satellite X, satellite Y, satellite Z} is reported.
For example, it is assumed that the terminal 20 obtains a report value by using a center point of a serving cell, a center point of a first neighbor cell, and a center point of a second neighbor cell as reference points, and performs reporting. In this case, the terminal 20 reports information indicating which cell each report value is associated with, together with the report value. For example, the terminal 20 reports information of {serving cell, first neighbor cell, second neighbor cell}.

<Implicit notification of reference point>

When reporting the N values, the terminal 20 may report which reference point each report value is associated with, using the order of the plurality of report values. The order may be defined in advance or may be configured in the terminal 20 from the NW.
For example, when the first value of three report values as a plurality of report values is associated with satellite X, the next value is associated with satellite Y, and the last value is associated with satellite Z, the terminal 20 reports a value (for example, TA1) obtained with the satellite X as a reference point, a value (for example, TA2) obtained with the satellite Y as a reference point, and a value (for example, TA3) obtained with the satellite Z as a reference point as information of a sequence of {TA1, TA2, TA3}.

For example, when the first value of three report values as the plurality of report values is associated with a serving cell, the next value is associated with a first neighbor cell, and the last value is associated with a second neighbor cell, the terminal 20 reports a value (for example, TA1) obtained by using a center point of the serving cell as a reference point, a value (for example, TA2) obtained by using a center point of the first neighbor cell as a reference point, and a value (for example, TA3) obtained by using a center point of the second neighbor cell as a reference point as information of a sequence of {TA1, TA2, TA3}.

According to Example 2 described above, the terminal 20 reports a plurality of pieces of position-related information to the NW, and thus the NW can estimate the accurate position of the terminal 20.

(Example 2)

In Example 2, the terminal 20 directly reports the positon of the terminal 20 to the NW. Examples of the information to be reported include the following Alt1 to 3.

Al t1:

The terminal 20 reports a position of the terminal 20 obtained by GNSS to the NW as position information in a format of ECEF.

Alt2:

The terminal 20 reports a position of the terminal 20 obtained by GNSS as position information in an ECEF format converted with a certain bias. The bias is set in consideration of security. That is, confidentiality of the position information is improved by applying the bias.

More specifically, the terminal 20 may perform the conversion by adding an offset to the position of the terminal 20 obtained by GNSS, or may perform the conversion by inputting the position of the terminal 20 obtained by GNSS to a function. The offset/function may be predefined/fixed in the technical specification, may be configured from the NW to the terminal 20, or may be determined by the terminal 20 and reported from the terminal 20 to the NW. The function may be a function of "adding an offset".

Alt3:

The terminal 20 may report, to the NW, a distance between the terminal 20 and the satellite and an azimuth angle and an elevation angle from the terminal 20 to the satellite.

The terminal 20 can calculate each of the values from GNSS and satellite ephemeris broadcast from the NW. The position determined by these values is not easily falsified.

(Granularity and reporting trigger in Example 2)

The granularity of the value reported by the terminal 20 may be any of m/cm/a plurality of m/a plurality of cm/ and the like.

As a trigger for the terminals 20 to a value, for example, the following Alt1 to 5 are available. That is, when determining that at least one of the following five conditions of Alt1 to 5 is satisfied, the terminal 20 reports the value to the NW with the determination as a trigger. Note that any two or more of Alt1 to 5 may be combined.

Al t1:

Value reporting is performed in a RACH procedure (random access procedure). The terminal 20 obtains a value to be reported and reports the value, with the start of the RACH procedure as a trigger. The terminal 20 may report the value by including the value in a MSG3 or a MSGA.

Alt2 :

A timer (periodic timer) is configured in the terminal 20 from the base station 10. For example, the timer is returned to the initial value and started at the time when the terminal 20 reports the value. When the timer expires, the terminal 20 reports the value with the expiration as a trigger.

Alt3:

A threshold is configured in the terminal 20 from the NW. When detecting that the current value has changed by a value larger than a threshold value from the value of the last (most recent) report that has succeeded, the terminal 20 reports the value using the detection as a trigger. If all values are included in the same MAC CE/RRC/PHY, the following may apply.

Alt3-1:

The terminal 20 triggers reporting when any one of the plurality of values changes by a value larger than a threshold value.

Alt3-2:

The terminal 20 triggers reporting when all of the plurality of values (each of the plurality of values) change by a value larger than a threshold value.

Alt3-3:

The terminal 20 triggers reporting when a plurality of values, but not all of the values, change by a value greater than a threshold value.

Alt4:

The terminal 20 performs reporting using signaling of a configuration/instruction received from the base station 10 as a trigger.

Alt5:

When uplink data transmission is performed, if there is a free PUSCH resource for data transmission, the terminal 20 may report a value using the free resource.
According to Example 2 described above, the terminal 20 can report position information with high confidentiality.

(Example 3)

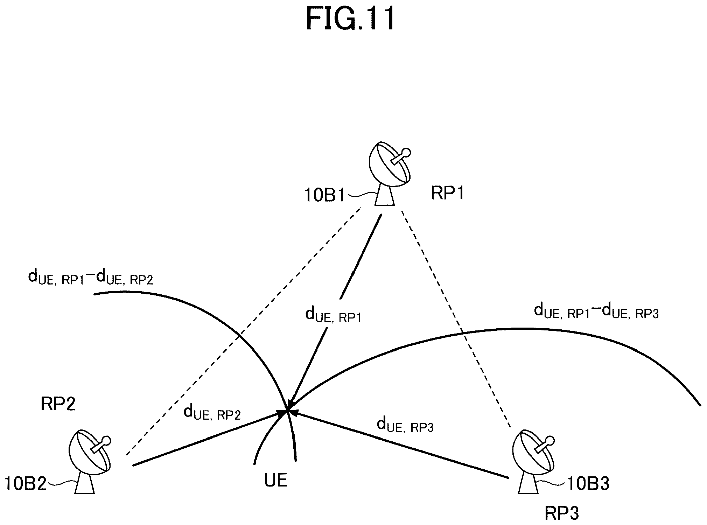

Next, Example 3 will be described. In Example 3, the terminal 20 reports, to the NW, a plurality of (N) values of a difference in "TA/RTT/one-way propagation delay/distance" between a position of the terminal 20 obtained by GNSS and two reference points.
An example will be described with reference to FIG. 11. In the example of FIG. 11, GW 10B1 to GW 10B3 are used as RP1 to RP3. In this example, the terminal 20 reports, to the NW, a difference ($d_{UE,RP1} - d_{UE,RP2}$) between the distance $d_{UE,RP1}$ between the terminal 20 and RP1 and the distance $d_{UE,RP2}$ between the terminal 20 and RP2, and a difference ($d_{UE,RP1}-d_{UE,RP3}$) between the distance $d_{UE,RP1}$ between the terminal 20 and RP1 and the distance $d_{UE,RP3}$ between the terminal 20 and RP3. Note that "RP", i.e., a reference point, may be replaced with "satellite".
As described above, the terminal 20 reports the difference of distances and the like between the position of the terminal 20 obtained by GNSS and the two reference points to the NW, and thus the NW can estimate the position of the terminal 20 and can verify the position (the position obtained by GNSS) reported from the terminal 20, for example.
The number N of values will be described in Example 3-1 described later. In addition, a method of determining a reference point will be described in Example 3-2 to be described later.
Each reported value may be, for example, any of the following Alt1 to 4.

Al t1:

A difference in TA between a position of the terminal 20 and two reference points.

Alt2 :

A difference in RTT between a position of the terminal 20 and two reference points.

Alt3:

A difference in one way propagation delay between a position of the terminal 20 and two reference points.

Alt4:

A difference in distance between a position of the terminal 20 and two reference points.
N values that are the number of values to be reported may be the values of the same Alt or may be values of a plurality of different Alts. For example, when three values are reported, the terminal 20 may report three "differences in distance", or may report "difference in TA", "difference in RTT", and "difference in distance".
The terminal 20 may calculate/determine each of the N values based on a relationship with different satellites. For example, the terminal 20 calculates a value #0 using a satellite #0 and calculates a value #1 using a satellite #1. The same applies to a value #3 and subsequent values. The "satellite" may be replaced with a "reference point".
For TA/RTT/propagation delay, the granularity of the report value may be any of a slot/symbol/a plurality of slots/ a plurality of symbols/Tc/ a plurality of Tc/subframe/a plurality of subframes/ms/ a plurality of ms. With respect to the distance, the granularity may be any of m/cm/ a plurality of m/a plurality of cm and the like.

(Example 3: Reporting methods)

The terminal 20 may transmit the report value by any of MAC CE, RRC, and PHY (as UCI). More particularly, there are the following Alt1 and Alt2.

Al t1:

The terminal 20 includes all of a plurality of values in the same MAC CE/RRC signaling/PHY signaling. For example, when three values are reported, assuming that MAC CE is used, the terminal 20 reports the three values by including the three values in the MAC CE.

Alt2 :

The terminal 20 may report a plurality of values by dividing the values into any of MAC CE/RRC signaling/PHY signaling. For example, when three values are reported, the terminal 20 may report, for example, a value 1 in the MAC CE, a value 2 in the RRC, and a value 3 in the UCI.

(Example 3: Reporting trigger)

As a trigger for the terminal 20 to report a value, for example, the following Alt1 to 5 are available. That is, when determining that at least one of the following five conditions Alt1 to 5 is satisfied, the terminal 20 reports a value to the NW with the determination as a trigger. Note that any two or more of Alt1 to 5 may be combined.

Al t1:

Value reporting is performed in a RACH procedure (random access procedure). The terminal 20 obtains a value to be reported and reports the value, with the start of the RACH procedure as a trigger. The terminal 20 may report the value by including the value in a MSG3 or a MSGA.

Alt2 :

A timer (periodic timer) is configured in the terminal 20 from the NW. For example, the timer is returned to the initial value and started at the time when the terminal 20 reports the value. When the timer expires, the terminal 20 reports the value with the expiration as a trigger.

14

Alt3:

A threshold is configured in the terminal 20 from the NW. When detecting that the current value has changed by a value larger than a threshold value from the value of the last (most recent) report that has succeeded, the terminal 20 reports the value using the detection as a trigger. If all values are included in the same MAC CE/RRC/PHY, the following may apply.

Alt3-1:

The terminal 20 triggers reporting when any one of the plurality of values changes by a value larger than a threshold value.

Alt3-2:

The terminal 20 triggers reporting when all of the plurality of values (each of the plurality of values) change by a value larger than a threshold value.

Alt3-3:

The terminal 20 triggers reporting when not all of but multiple values of the plurality of values change by a value larger than a threshold.

Alt4:

The terminal 20 performs reporting using signaling of a configuration/instruction received from the NW as a trigger.

Alt5:

When uplink data transmission is performed, if there is a free PUSCH resource for data transmission, the terminal 20 may report a value using the free resource.

(Example 3-1)

If a plurality of reference points exist on the same plane as the terminal 20 (for example, if all the reference points exist on the earth), two difference values that can define two hyperbolas are necessary to calculate the position of the terminal 20. Also, three reference points may be required.

When a plurality of reference points and the terminal 20 are not present on the same plane, a plane rotated by a hyperbola may be determined by the difference value. Thus, in this case, three difference values are required to calculate the position of the terminal 20. Also, four reference points may be required.

The number N of report values is N=2 or N=3. However, N=2 or 3 is an example, and a value other than N=2 or 3 may be used. For example, N may be 4, 5, or 6 or more.

The number N of report values may be predefined/fixed by the technical specification, may be configured/indicated to the terminal 20 from the NW, may be reported from the terminal 20 to the NW as UE capability, or may be determined based on a given condition (e.g., how many satellites the terminal 20 is tracking).

(Example 3-2)

The terminal 20 needs to determine two reference points for each reporting value in Example 3. As a method for the terminal 20 to determine each reference point, the method described in the Example 1-2 can be applied. For example, two different satellites may be used as the two reference points for one difference value, and two different cell centers may be used as the two reference points for another difference value.

According to Example 3 described above, the terminal 20 reports a plurality of pieces of position-related information to the NW, and thus the NW can estimate the accurate position of the terminal 20.

(Example 4)

Next, Example 4 will be described. In the above-described Examples 0/1/2/3, the terminal 20 may report, to the NW, an offset (difference) between the current value of the position-related information (TA/RTT/propagation delay/distance/position/difference, etc.) and the report value (TA/RTT/propagation delay/distance/position/difference, etc.) of the last (most recent) report that has succeeded.

That is, the terminal 20 reports an offset=n_new-n_old to the NW. Here, n_new is the current value and n_old is the last (most recent) successful report value.

The n new and n_old are TA in the case of Example 0, TA/RTT/one way propagation delay/distance in the case of Example 1, position information in the case of Example 2, and a difference of "TA/RTT/one way propagation delay/distance" between the position of the terminal 20 obtained by GNSS and two reference points in the case of Example 3.

According to Example 4, for example, a time-series transition of the position-related information can be grasped in the NW. In addition, in the NW, when an impossible difference is detected between n_new and n_old, a failure, an unauthorized operation, or the like can be estimated.

(Other examples)

The following terminal capabilities (UE capabilities) may be defined and reported from the terminal 20 to the NW.

- Terminal capability indicating whether or not the function (NW verify UE location) according to the present embodiment is supported
- Terminal capability indicating whether or not reporting of TA/RTT/one way propagation delay/distance as the position-related information of the terminal is supported (Example 0/1)
- Terminal capability indicating whether or not reporting of a terminal position obtained by GNSS or information obtained by converting a terminal position obtained by GNSS is supported (Example 2)
- Terminal capability indicating whether or not reporting of a difference in "TA/RTT/one way propagation delay/distance" between a position of the terminal obtained by GNSS and two reference points is supported

(Example 3)

The operation of the present embodiment may be applied only when the terminal capability is reported from the terminal 20 to the NW. In addition, the operation of the present embodiment may be applied only when the operation is notified from the NW to the terminal 20 through higher layer signaling. In addition, the operation of the present embodiment may be applied only when the terminal capability is reported from the terminal 20 to the NW and the operation is notified from the NW to the terminal 20 through higher layer signaling.

Furthermore, reporting of the position-related information from the terminal 20 to the NW according to the present embodiment may be applied to networks (for example, a terrestrial network) other than NTN.

(Apparatus Configuration)

Next, functional configuration examples of the base station 10 and the terminal 20 that execute processes and operations described above will be described. The base station 10 and the terminal 20 include functions for performing the above-described Examples. However, each of the base station 10 and the terminal 20 may include only functions of any one of the proposals of the Examples.

<Base Station 10>

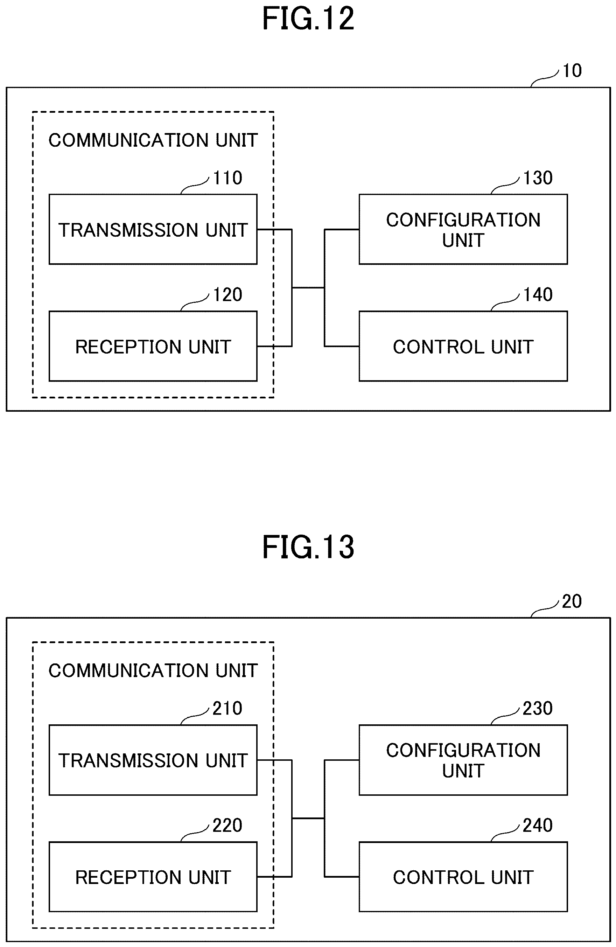

FIG. 12 is a diagram illustrating an example of a functional configuration of the base station 10. As illustrated in FIG. 12, the base station 10 includes a transmission unit 110, a reception unit 120, a configuration unit 130, and a control unit 140. The functional configuration shown in FIG. 12 is merely an example. The functional sections and the names of the functional units may be any as long as the operations according to the embodiment of the present invention can be executed. The transmission unit 110 and the reception 120 may be referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DL data, and the like to the terminal 20. The transmission unit 110 transmits the configuration information and the like described in the Examples.

The configuration unit 130 stores configuration information configured in advance and various kinds of configuration information to be transmitted to the terminal 20 in the storage device, and reads the configuration information from the storage device as necessary. The control unit 140 performs, for example, control of the entire base station 10 including control related to signal transmission and reception. Note that the functional units related to signal transmission in the control unit 140 may be included in the transmission unit 110, and the functional units related to signal reception in the control unit 140 may be included in the reception unit 120. The transmission unit 110 and the reception unit 120 may be referred to as a transmitter and a receiver, respectively.

<Terminal 20>

FIG. 13 is a diagram illustrating an example of a functional configuration of the terminal 20. As illustrated in FIG. 13, the terminal 20 includes a transmission unit 210, a reception unit 220, a configuration unit 230, and a control unit 240. The functional configuration shown in FIG. 13 is merely an example. The functional sections and the names of the functional units may be any as long as the operations according to the embodiment of the present invention can be executed. The transmission unit 210 and the reception unit 220 may be referred to as a communication unit.

The transmission unit 210 creates a transmission signal from transmission data and transmits the transmission signal by radio. The reception unit 220 receives various signals by radio and obtains a signal of a higher layer from the received signal of the physical layer. The transmission unit 210 transmits HARQ-ACK, and the reception unit 220 receives configuration information and the like described in the Examples. The transmission unit 210 reports (transmits) the position-related information described in the Examples.

The configuration unit 230 stores various types of configuration information received from the base station 10 by the reception unit 220 in the storage device, and reads the configuration information from the storage device as necessary. The configuration unit 230 also stores configuration information configured in advance. The control unit 240 performs control of the entire terminal 20 including control related to signal transmission and reception. The control unit 240 obtains (calculates) the position-related information described in the Examples. Note that the functional units related to signal transmission in the control unit 240 may be included in the transmission unit 210, and the functional units related to signal reception in the control unit 240 may be included in the reception unit 220. The transmission unit 210 and the reception unit 220 may be referred to as a transmitter and a receiver, respectively.

<Supplementary Notes>

The terminal of the present embodiment may be configured as a terminal described in each of the following items. The following reporting method may also be carried out.

(Item 1)

A terminal including:

a control unit configured to obtain a plurality of pieces of terminal position-related information using a plurality of reference points that are related to a non-terrestrial network; and
a transmission unit configured to report the plurality of pieces of terminal position-related information to a base station.

(Item 2)

The terminal as described in item 1,
wherein the plurality of reference points include a satellite or a flying object.

(Item 3)

The terminal as described in item 1 or 2,
wherein the plurality of pieces of terminal position-related information include at least any one of a timing advance value between a reference point and the terminal, a round trip delay between a reference point and the terminal, a one way propagation delay between a reference point and the terminal, and a distance between a reference point and the terminal.

(Item 4)

The terminal as described in any one of items 1 to 3,
wherein the plurality of pieces of terminal position-related information include at least any one of a difference in timing advance values between the terminal and two reference points, a difference in round trip delays between the terminal and two reference points, a difference in one way propagation delays between the terminal and two reference points, and a difference in distances between the terminal and two reference points.

(Item 5)

A terminal including:

a control unit configured to obtain terminal position information by GNSS and convert the terminal position information, by adding an offset to the terminal position information or by inputting the terminal position information into a function; and

a transmission unit configured to report the converted terminal position information to a base station.

(Item 6)

A reporting method executed by a terminal, the reporting method including:

obtaining a plurality of pieces of terminal position-related information using a plurality of reference points that are related to a non-terrestrial network; and

reporting the plurality of pieces of terminal position-related information to a base station.

According to any of the above configurations, there is provided a technique for a terminal to transmit appropriate terminal position-related information to a network. According to item 2, a satellite or a flying object can be used as a reference point. According to items 3 and 4, the network side can accurately estimate the position of the terminal.

(Hardware Configuration)

The block diagrams (FIGS. 12 and 13) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

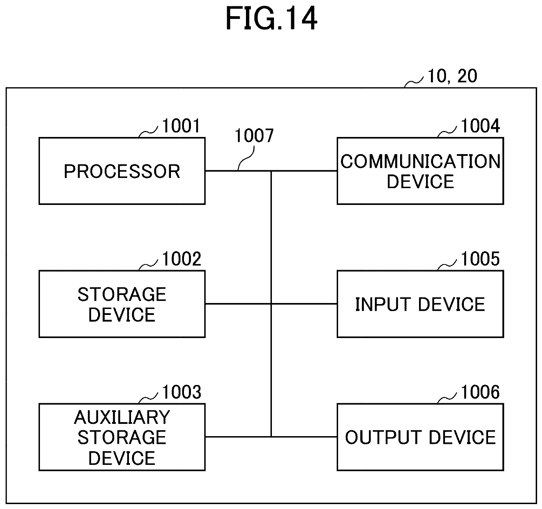

For example, the base station 10, the terminal 20 and the like in one embodiment of this disclosure may function as a computer for performing the processing of a radio communication method of this disclosure. FIG. 14 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 12 may be attained by a control program that is stored in the storage device 1002 and is operated by the processor 1001. Also, for example, the control unit 240 of the terminal 20 shown in FIG. 13 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

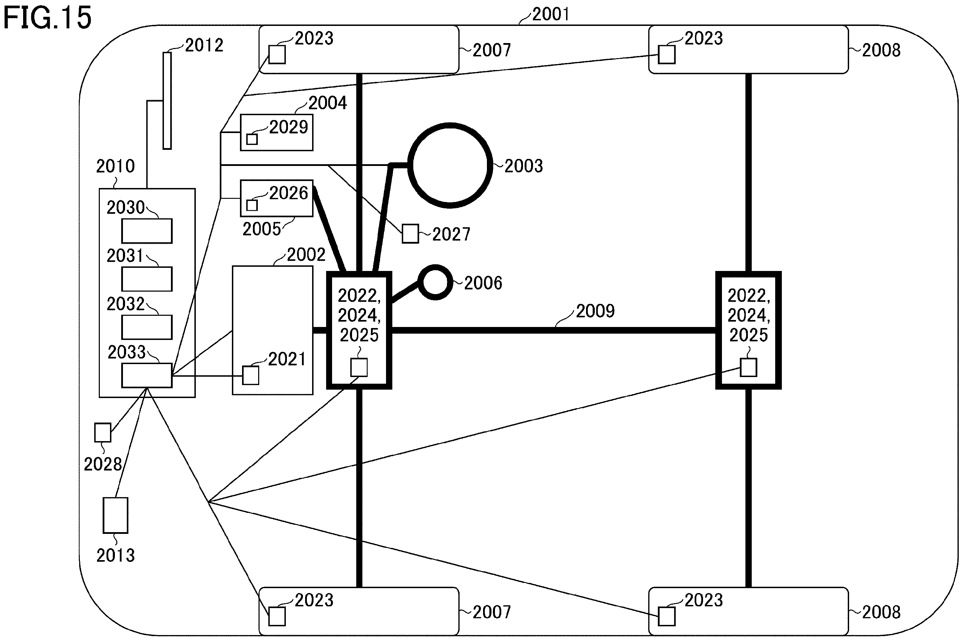

FIG. 15 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. For example, the functions of the terminal 20 may be incorporated in the communication module 2013. Also, for example, the functions of the base station 10 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

(Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a

EP 4 447 573 A1

server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, 4th generation mobile communication system (4G), 5th generation mobile communication system (5G), 6th generation mobile communication system (6G), xth generation mobile communication system (xG) (x is an integer or a decimal, for example), New radio access (NX), Future generation radio access (FX), future radio access (FRA), new radio (NR), W-CDMA (Registered Trademark), GSM (Registered Trademark), CDMA2000, ultra mobile broadband (UMB), IEEE 802.11 (Wi-Fi (Registered Trademark)), IEEE 802.16 (WiMAX (Registered Trademark)), IEEE 802.20, ultra-wideband (UWB), Bluetooth (Registered Trademark), and other suitable systems and a next-generation system that is expanded, modified, generated or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

21

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

Description of Symbols

    10 base station
    10A satellite
    10B gateway
    10C terrestrial base stations
    10D CN
    10E flying object
    110 transmission unit
    120 reception unit
    130 configuration unit
    140 control unit
    20 terminal
    210 transmission unit
    220 reception unit
    230 configuration unit
    240 control unit
    30 core network

1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

**Claims**

1. A terminal comprising:

   a control unit configured to obtain a plurality of pieces of terminal position-related information using a plurality of reference points that are related to a non-terrestrial network; and
   a transmission unit configured to report the plurality of pieces of terminal position-related information to a base station.

2. The terminal as claimed in claim 1,
   wherein the plurality of reference points include a satellite or a flying object.

3. The terminal as claimed in claim 1 or 2,
   wherein the plurality of pieces of terminal position-related information include at least any one of a timing advance value between a reference point and the terminal, a round trip delay between a reference point and the terminal, a one-way propagation delay between a reference point and the terminal, and a distance between a reference point and the terminal.

4. The terminal as claimed in any one of claims 1 to 3,
   wherein the plurality of pieces of terminal position-related information include at least any one of a difference in timing advance values between the terminal and two reference points, a difference in round trip delays between the terminal and two reference points, a difference in one-way propagation delays between the terminal and two reference points, and a difference in distances between the terminal and two reference points.

5. A terminal comprising:

a control unit configured to obtain terminal position information by GNSS and convert the terminal position information, by adding an offset to the terminal position information or by inputting the terminal position information into a function; and

a transmission unit configured to report the converted terminal position information to a base station.

6. A reporting method executed by a terminal, the reporting method comprising:

obtaining a plurality of pieces of terminal position-related information using a plurality of reference points that are related to a non-terrestrial network; and

reporting the plurality of pieces of terminal position-related information to a base station.

# FIG.1

EP 4 447 573 A1

# FIG.2

10A

Satellite

Service link

Delay difference
10.3 ms (GEO)
3.2 ms (LEO)

Feeder link

UE
(Far
end)

UE
(Near
end)

20B

20A

10B

NTN beam size
3500 km (GEO)
1000 km (LEO)

NTN gateway

EP 4 447 573 A1

# FIG.3

GEO

Altitude: 35,786 km
Geostationary orbit

LEO

Altitude: 500 – 2,000 km
Orbital period: 88 – 127 min

} Satellite (space)

HAPS

Altitude: 8 – 50 km
Circling flight

} Flying object (air)

gNB    Gateway

GEO

LEO

HAPS

EP 4 447 573 A1

# FIG.4

EP 4 447 573 A1

# FIG.5

(a)      gNB DL   | n |   |   |   |

(b)                UE DL   | n |   |   |   |

RTT

(c)   UE UL   | n |   |   |   |

(d)      gNB UL   | n |   |   |   |

# FIG.6

10A

Common TA
$T_0$

Terminal-
specific TA
$T_1$

User transparent
$T_2$

Reference point

10B

20A

One beam/cell

# FIG.7

BASE STATION    /10

TERMINAL    /20

S100

S101

Obtain position-related information

Position-related information

S102

FIG.8

# FIG.9

10A

Reference point

20

# FIG.10

EP 4 447 573 A1

# FIG.11

# FIG.12

# FIG.13

# FIG.14

~10, 20

~1001
PROCESSOR

1007

~1004
COMMUNICATION DEVICE

~1002
STORAGE DEVICE

~1005
INPUT DEVICE

~1003
AUXILIARY STORAGE DEVICE

~1006
OUTPUT DEVICE

FIG.15

EP 4 447 573 A1

## INTERNATIONAL SEARCH REPORT

| International application No. |
|---|
| **PCT/JP2021/045715** |

### A. CLASSIFICATION OF SUBJECT MATTER

*H04W 64/00*(2009.01)i; *H04W 84/06*(2009.01)i
FI: H04W64/00 140; H04W84/06

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | FRAUNHOFER IIS. FRAUNHOFER HHI. THALES. Virtual cells for network verified UE position in NTN networks [online]. 3GPP TSG RAN WG2 #115-e R2-2107150. 04 August 2021<br>    section 3 | 1-4, 6 |
| Y | | 5 |
| Y | NOKIA, NOKIA SHANGHAI BELL. On User Plane aspects for IoT NTN [online]. 3GPP TSG RAN WG2 #116-e R2-2110706. 22 October 2021<br>    section 2.4 | 5 |
| A | JP 2000-68917 A (ICO SERVICES LTD) 03 March 2000 (2000-03-03)<br>    entire text, all drawings | 1-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/045715**

| Patent document cited in search report | | | Publication date (day/month/year) | Patent family member(s) | | | Publication date (day/month/year) |
|---|---|---|---|---|---|---|---|
| JP | 2000-68917 | A | 03 March 2000 | EP | 964531 | A1 | |
| | | | | whole documents | | | |

Form PCT/ISA/210 (patent family annex) (January 2015)